(19) **Europäisches Patentamt / European Patent Office / Office européen des brevets**

(11) **EP 1 825 294 B1**

(12) **EUROPÄISCHE PATENTSCHRIFT**

(45) Veröffentlichungstag und Bekanntmachung des Hinweises auf die Patenterteilung:
**08.06.2011   Patentblatt 2011/23**

(51) Int Cl.:
***G01S 7/486*** *(2006.01)*

(21) Anmeldenummer: **05817590.2**

(22) Anmeldetag: **09.12.2005**

(86) Internationale Anmeldenummer:
**PCT/EP2005/013242**

(87) Internationale Veröffentlichungsnummer:
**WO 2006/063740 (22.06.2006 Gazette 2006/25)**

(54) **EINKANAL-HETERODYN-DISTANZMESSVERFAHREN**

SINGLE-CHANNEL HETERODYNE DISTANCE MEASURING METHOD

PROCEDE DE MESURE DE DISTANCE HETERODYNE A UN SEUL CANAL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.12.2004   EP 04030085**

(43) Veröffentlichungstag der Anmeldung:
**29.08.2007   Patentblatt 2007/35**

(73) Patentinhaber: **Leica Geosystems AG
9435 Heerbrugg (CH)**

(72) Erfinder:
- **BENZ, Paul
  CH-9444 Diepoldsau (CH)**
- **HINDERLING, Jürg
  CH-9437 Marbach (CH)**
- **DE-LANGE, Martin
  CH-8593 Kesswil (CH)**

(74) Vertreter: **Harmann, Bernd-Günther
Kaminski Harmann Patentanwälte Est
Austrasse 79
9490 Vaduz (LI)**

(56) Entgegenhaltungen:
EP-A- 1 450 128    DE-C1- 10 112 833
US-A- 5 428 439    US-A- 5 889 490

**Beschreibung**

Die Erfindung betrifft ein Distanzmessverfahren nach Anspruch 1, eine Distanzmessvorrichtung nach Anspruch 9 und ein Computerprogrammprodukt.

Im Bereich der elektronischen Distanzmessung sind verschiedene Prinzipien und Verfahren bekannt, wobei die zwei grundlegenden optoelektronischen Messprinzipien durch Phasenmesser und Laufzeitmesser verkörpert werden. Beide Prinzipien besitzen vor- und Nachteile und kommen in einer Vielzahl von geodätischen Geräten zum Einsatz. So sind beispielsweise die bei der geodätischen Vermessung verwendeten Messmittel, wie Theodolite bzw. Tachymeter, hauptsächlich mit Phasenmessern ausgerüstet, da diese die Vorteile der hohen Genauigkeit und kleinen Bauform haben, welche die Integration in ein Fernrohr erleichtern.

In der Phasenmesstechnik werden Lichtpulse (üblicherweise Rechtecksignale) mit Repetitionsfrequenzen im Bereich von einigen MHz, bis zu einigen 100 MHz ausgesandt. Als Lichtquellen können dazu neben LEDs auch herkömmliche CW-Laserdioden mit Spitzenleistungen von einigen mW verwendet werden. Die mittlere abgestrahlte Energie ist genügend hoch, somit ist die Sichtbarkeit des Laserspots auf dem Ziel für die mit Phasenmessern zu vermessenden Distanzen kein Problem.

Zur Distanzmessung wird die Phasenlage des ausgesandten Signals mit der des zurückkommenden Signals verglichen. Die Phasenverschiebung ist proportional zur Messstrecke. Das von einer Photodiode empfangene HF-Signal wird verstärkt, und mit Hilfe eines Phase-Locked-Loop-(PLL)-geregelten Lokaloszillatorsignals, phasentreu auf ein tieferes Frequenzband herunter gemischt.

Anstelle einer hochfrequenten Signalabtastung, mit Samplingraten im GHz-Bereich, kann mit einem niederfrequenten Empfangssignal wesentlich einfacher gearbeitet werden. Hierbei ist die Abtastung und Analog-Digital-Konversion im niederfrequenten (NF)-Bereich um Grössenordnungen einfacher, genauer und weniger stromkonsumierend. Bei herkömmlichen Phasenmessern wird nur die Grundharmonische des heruntergemischten NF-Signals verwendet.

Um die Eindeutigkeit eines Phasenmesssystems vom Meterbereich in den km-Bereich zu erweitern, werden üblicherweise neben der Feindistanzmessung, eine oder mehrere Grobdistanzmessungen mit tieferen Modulationsfrequenzen durchgeführt.

Zur Erreichung einer genügenden Absolutgenauigkeit werden üblicherweise nacheinander ein interner Lichtweg (Kalibrier- bzw. Referenzstrecke) und ein externer Lichtweg (Messstrecke) gemessen. Auf diese Weise können Veränderungen von Laufzeiten in der Elektronik kalibriert werden. Eine Kalibrierung der Laufzeitveränderungen kann auch mittels zweier identischer, paralleler Empfangskanäle realisiert werden. Genaue Distanzmessung ist bei Phasenmessern nur mit 2 Kanälen mit hoher Signaltrennung möglich.

Die Vorteile des Phasenmessers liegen insbesondere im einfachen Aufbau, der Messung auf NF-Niveau und der erhältlichen zuverlässigen Strahlquellen.

Als nachteilig stellt sich die Verfälschung der Messdistanz durch die Überlagerung von Signalen aufgrund des optischen Übersprechens heraus, so dass eine ausgeprägte Kanaltrennung hoher Unterdrückung benötigt wird. Eine genaue Distanzmessung verlangt somit eine rigorose Signaltrennung zwischen Sendekanal und Empfangskanal, was in einem Fernrohr mit kleiner Baugrösse sehr schwierig zu erreichen, komplex und aufwendig ist. Zudem sollte nur ein Ziel im Messstrahl liegen, da sonst neben Feindistanzmessfehlern auch Fehler bei der Grobdistanzbestimmung auftreten können. Für längere Distanzen sind sowohl wenigstens eine Grob- als auch eine Feinmessung notwendig. Einkanal-Messprinzipien, d.h. solche ohne Lichtweg- oder Kanalumschalter, sind mit einfachem Frequenzkonzept nicht möglich.

Laufzeitmesser weisen zwar den Nachteil einer rigorosen Signaltrennung nicht auf, jedoch ist ihre Messgenauigkeit für die geodätische Vermessung oft zu ungenau, insbesondere wenn sub-mm-Genauigkeiten gefordert sind.

Bei Entfernungsmessern, die nach diesem Prinzip arbeiten, wird ebenfalls ein Lichtpuls ausgesendet, wobei dieser Lichtpuls durch geeignete optische Massnahmen so aufgeteilt wird, dass ein Teil über einen internen Lichtweg (Kalibrierstrecke) direkt zum Empfänger geführt wird, wohingegen der verbleibende Anteil des Lichtes aus dem Gerät über den externen Lichtweg geschickt wird.

Dieser externe Anteil trifft auf ein in einiger Entfernung - der zu vermessenden Distanz - stehendes Ziel (=Messstrecke) und wird von dort wieder zurück reflektiert und über "eine geeignete Optik zum gleichen Empfänger geführt, wobei der Empfänger zweckmässigerweise eine Photodiode mit nachgeschaltetem Verstärker ist.

Der über den internen Lichtweg geführte Lichtpuls erzeugt im Empfänger einen Referenzpuls, der im weiteren als Startpuls bezeichnet wird. Der über den externen Lichtweg (Messstrecke) geführte Lichtpuls erzeugt im Empfänger den sogenannten Messpuls, der im weiteren als Stoppuls bezeichnet wird.

Da die Längen des internen und des externen Lichtweges unterschiedlich sind, treffen die beiden Lichtpulse zu unterschiedlichen Zeiten beim Empfänger ein. Die Zeitdifferenz zwischen Startpuls und Stoppuls wird als Laufzeit bezeichnet, und ist proportional zum Längenunterschied von interner und externer Lichtstrecke. Die zu messenden Zeitunterschiede sind sehr gering, d.h. sie müssen extrem genau bestimmt werden, um auf eine für ein brauchbares Distanzmesssystem taugliche geodätische Genauigkeit von mm oder sub-mm zu kommen. Zur Bestimmung der Laufzeit wird zumeist das Empfangssignal digitalisiert, wozu sehr aufwendige hochfrequente elektronische Schaltungen mit Samplingraten im GHz - Bereich notwendig sind.

Weitere Lichtpulse werden vom Sender erst ausgesandt, nachdem der Stoppuls beim Empfänger eingetroffen ist. Dies bedingt eine relativ tiefe Pulsrepetitionsfrequenz von einigen 10 kHz, damit eine Eindeutigkeit von einigen km gewährleistet werden kann. Um bei einer solch tiefen Pulsrepetitionsfrequenz eine genügend grosse Lichtenergie abstrahlen zu können, so dass der Laserspot gut sichtbar wird, bzw. dass bis ans Limit der Augensicherheit (Laserklasse 2) gegangen werden kann, muss die Spitzenleistung je nach Pulsbreite im Bereich von mehreren 10 W bis 1 kW liegen.

Vorteile der Einkanal-Laufzeitmessung sind die nicht vorhandene zeitliche Drift, weil Start- und Stoppuls kurz nacheinander stattfinden, und den gleichen Laufzeiten unterworfen sind, die Unempfindlichkeit gegen optischen Crosstalk, weil der Stoppuls erst nach dem Crosstalk-Puls stattfindet und der Wegfall der nicht benötigten schaltbaren optischen Komponenten für den internen und externen Lichtweg.

Die Nachteile der Laufzeitmessung liegen jedoch vor allem in der sehr aufwendigen Abtastung und der Zeitmessung der HF-Signale und den aufwendigen Strahlquellen, die zudem schwierig zu handhaben sind (z.B. Mikrochiplaser mit Gütemodulation). Halbleiterlaserdioden mit hoher Spitzenleistung haben eine unvorteilhaft ausgedehnte Leuchtfläche, die Strahlung kann nur unzulänglich gebündelt oder kollimiert werden. Nur mit hinlänglich räumlich kohärenten Punktlichtquellen, welche aus einer beugungsbegrenzt, kleinen Fläche abstrahlen, kann der Laserstrahl zu einem quasi-parallelen Bündel mit genügend kleiner Divergenz fokussiert werden. Halbleiterlaserdioden, welche aus einer solchen beugungsbegrenzt, kleinen Fläche abstrahlen, und sich damit zu einem Strahl mit genügend kleiner Divergenz fokussieren lassen, haben bis heute eine auf wenige 100 mW begrenzte, und damit für einen Pulslaufzeitmesser viel zu niedrige Spitzen-Sendeleistung.

Zwar sind diverse Anordnungen die ohne Kanaltrennung und Lichtumschaltung auskommen bekannt, aber alle Lösungen sind mit diversen Nachteilen behaftet.

Ein Verfahren und eine Vorrichtung zur opto-elektronischen Entfernungsmessung nach dem Phasenmessprinzip sind in der Schrift DE 100 06 493 C2 beschrieben. Der Phasenmesser ist mit einem 2-Kanal Empfänger ohne mechanische Lichtwegumschaltung ausgestattet, wobei die Schaltung mit 2 Photoempfängern bestückt ist. Bei einer Distanzmessung werden jeweils die Signalphasen am ersten und am zweiten Empfänger gemessen. Die gemessene Phase am ersten Empfänger beschreibt die Distanz des internen Referenzlichtwegs, die Phase am zweiten Empfänger die Distanz zum Zielobjekt. Die Differenz beider Phasen ergibt die driftfreie auf den Referenzlichtweg bezogene Absolutdistanz. Mit einem zweiten Sender kann simultan eine allfällige Phasendifferenz, erzeugt durch die beiden Photoempfänger und deren Verstärkungsschaltungen, gemessen werden. Nachteile dieser Lösung sind sowohl die beiden Sendeeinheiten und die beiden Photoempfänger, durch die eine erhöhte bauliche Komplexität resultiert, als auch die Verschränkung der beiden Lichtwege mittels zweier Elemente zur Strahlzusammenführung vor jedem der beiden Photoempfänger.

Eine zweite Anordnung ist in der Schrift US 6,369,880 beschrieben. Der dort geoffenbarte Phasenmesser ist mit einem 2-Kanal-Empfänger ohne mechanische Lichtwegumschaltung und mit 2 Photoempfängern ausgestattet. Bei einer Distanzmessung werden jeweils die Signalphasen am ersten und am zweiten Empfänger gemessen, wobei die Differenz der beiden Phasen der Messdistanz entspricht. Ein Nachteil dieser Lösung ist ebenfalls die doppelte Ausführung der photo- und phasensensitiven Empfangseinheit.

Die WO 03/069779 beschreibt einen Laufzeitmesser mit einem 2-Kanal-Empfänger ohne mechanische Lichtwegumschaltung, so dass auch bei Laufzeitmessern das optisch umschaltfreie Referenzmessprinzip realisiert wurde. Der geoffenbarte Laufzeitmesser verwendet jedoch ebenfalls 2 Photoempfänger. Die Signale der beiden Empfänger werden einer im Hochfrequenzbereich arbeitenden Zeitmesseinheit zugeführt. Bei einer Distanzmessung wird die Differenz der parallel gemessenen internen und externen Laufzeiten gebildet. Auch diese Lösung hat den Nachteil der doppelten Ausführung der Empfangseinheit.

Damit benötigen die Lösungen des Stands der Technik einen Umschaltmechanismus zwischen externem und internem Lichtweg oder eine doppelte Auslegung des Empfangssystems und sind somit konstruktiv aufwendig und komplex.

Die DE 10112833 C1 zeigt ein Verfahren und eine Vorrichtung zur elektrooptischen Distanzmessung welche die Vorteile eines Phasenlaufzeitverfahrens mit denen eines Impulslaufzeitverfahrens verbinden soll, wobei bei letzterem hohe Spitzenlichtleistungen, also ein gutes Signal-Rausch-Verhältnis im Vordergrund des Interesses stehen. Für die elektrooptische Entfernungsmessung wird der Laserstrahl einer Emitterdiode als intensitätsmodulierte Folge von Sendelichtimpulsen auf ein zielmarkenfreies Messobjekt gesendet und die dort reflektierten Messlichtimpulse durch einen Lichtdetektor erfasst, von dem ein erster Fotostromanteil generiert wird. Zudem wird von der intensitätsmodulierten Sendelichtimpulsfolge ein kleiner Anteil als Referenzlichtimpulsfolge abgezweigt und nach Durchlaufen einer bekannten Referenzstrecke ebenfalls auf den Lichtdetektor geleitet, wodurch ein zweiter Fotostromanteil erzeugt wird. Als Lichtdetektor wird eine Avalanche-Fotodiode verwendet, in der die überlagerten Messlichtimpulse direkt mit einer durch einen Lokaloszillator erzeugten Mischer-Impulsfolge in einen vergleichsweise niedrigen Zwischenfrequenzbereich umgesetzt werden, aus dem sich nach entsprechender Umwandlung die Meßdistanz bestimmen läßt.

Eine Schwierigkeit dieses Ansatzes liegt darin, dass sich Start- und Stoppuls überlagern können, so dass in diesem Fall eine Trennung bzw. Zuordnung der Pulse nicht möglich ist. Aufgrund der Zahl von 20 verwendeten Oberwellen werden Frequenzen bis in den Gigahertz-Bereich notwendig. Eine Reduzierung der verwendeten Oberwellen würde zu breiten Pulsen führen, was wiederum die Wahrscheinlichkeit einer Pulsüberlappung erhöht.

Eine Aufgabe der Erfindung besteht darin, ein Verfahren bzw. eine Vorrichtung zur Distanzmessung mit reduzierter Komplexität bzw. technischen Aufwand bereitzustellen.

Eine weitere Aufgabe der vorliegenden Erfindung ist es, Vorteile von Phasen- und Laufzeitprinzipen zu kombinieren, ohne deren Nachteile in Kauf nehmen zu müssen, und dabei insbesondere die Trennbarkeit von Pulsen zu ermöglichen.

Ein Distanzmesser mit mehr als einer Modulationsfrequenz der emittierten Strahlung ist auch beispielsweise aus der EP 1 450 123 bekannt. Hier wird zur Ableitung von geodätischen Entfernungsinformationen ein Lichtsignal auf ein- oder mehrere Ziele ausgesendet. Dabei werden Gerätekomponenten wie Sender und Empfänger zusammen mit den Zielen als ein lineares, zeitinvariantes System modelliert, das durch ein Signal angeregt und dessen Systemantwort aufgenommen wird. Im Gegensatz zu Laufzeit- oder Phasenmessern wird die Entfernungsinformation sowohl aus der zeitlichen Verschiebung als auch aus der Signalform der Systemantwort abgeleitet.

Diese Aufgaben werden durch die Gegenstände des Anspruchs 1 bzw. 9 oder der abhängigen Ansprüche gelöst bzw. die Lösungen weitergebildet.

Die Erfindung stellt sowohl ein neuartiges Distanzmessprinzip als auch eine Vorrichtung bestehend aus einer Laufzeitmesseinheit und einer einfachen optischen Sende- und Empfangseinheit ohne besondere Kanaltrennung zwischen den beiden Strahlengängen bereit. Die Distanzmessvorrichtung kann beispielsweise in Fernrohren wie sie bei geodätischen Vermessungsinstrumenten gebräuchlich sind eingebaut sein. Distanzen werden dabei auf natürliche Objekte als auch auf reflektierende Zielmarken wie Retroreflektoren gemessen.

Die Basis ist dabei ein Distanzmessprinzip mit gemeinsamer bzw. paralleler Vermessung zweier Laufzeiten, und zwar der Laufzeiten eines externen und eines internen Lichtsignals. Unter gemeinsamer oder paralleler Vermessung wird die verknüpfte Aufnahme von zwei zwar zeitlich aufgelöster, jedoch nah beieinander liegender Pulse verstanden. Somit bedingen die Begriffe "gemeinsam" oder "parallel" keine strenge Gleichzeitigkeit im Sinne einer strikten Simultanität sondern lediglich eine zeitliche Kohärenz der Pulsmessung oder einen unmittelbaren zeitlichen Zusammenhang während des Messvorgangs. Als eigentliche Messgrösse wird die Differenz der beiden Laufzeiten ausgegeben. Um die angestrebte mm- oder sub-mm- genaue Distanzmessung zu realisieren, wird somit weiterhin eine Referenzdistanz genutzt, die üblicherweise durch einen internen Referenzlichtweg gebildet wird. Auf das Umschalten zwischen zwei Lichtwegen kann erfindungsgemäss verzichtet werden.

Die Signale werden gleichzeitig sowohl über einen im Gerät internen Lichtweg als auch über den zu vermessenden externen Lichtweg auf eine, insbesondere einzige, gemeinsame Photodiode geleitet, so dass hierdurch ein Meßkanal definiert wird, wobei die Bestimmung der Laufzeit zwischen den beiden Signalpulsen eine Herausforderung darstellt. Die Aufgabe ist zusätzlich erschwert, da die Laserpulsfrequenzen im Bereich von einigen MHz bis GHz liegen. Auf dem zu vermessenden externen Lichtweg sind daher mehrere im Extremfall bis über 100 Lichtpulse gleichzeitig unterwegs. Gegenstand der Erfindung ist daher auch ein Ansatz, der es erlaubt, die Anzahl der Laser-Pulse im externen Lichtweg zu bestimmen, obwohl keine Codierung zur Kennung der Laser-Pulse verwendet wird. Die mit diesem Prinzip verbundenen Modulationsfrequenzen waren bisher nur bei Phasenmessern gebräuchlich.

Das der Erfindung zugrunde liegende Prinzip verbindet zudem die Vorteile der Laufzeitmessung mit denen der Phasenmessung. Grundsätzlich ähnelt der Ansatz einem einkanaligen Pulslaufzeitmesser. Anstelle einer hochfrequenten Abtastung des Signals mit Samplingraten im GHz - Bereich (wie im Pulslaufzeitmesser) wird jedoch das hochfrequente Empfangssignal mit Start- und Stoppuls gleichzeitig phasentreu auf ein tieferes Frequenzband heruntergemischt (wie im Phasenmesser).

Als Mischersignal kann ein, beispielsweise von einem PLLgeregelten Lokaloszillator erzeugtes, HF-Pulssignal verwendet werden. Deshalb werden beim erfindungsgemässen 1-Kanal-Heterodyne-System, anders als beim Phasenmesser, sämtliche Oberwellen mitverwendet. Dabei entsteht ein zeitgedehntes Abbild des hochfrequenten Start- und Stoppulses im NF-Bereich. Die Wahl des Faktors für eine sinnvolle Zeitdehnung ist jeweils von der Pulsfrequenz des Senders abhängig. Beispielsweise bei einer Pulsfrequenz von 1 MHz genügt ein Dehnungsfaktor von 1 MHz / (1 MHz / 128) = 128, hingegen bei einer Pulsfrequenz von 100 MHz bedarf es eines Dehnungsfaktors im Bereich von 500 MHz / (1MHz / 128) = 64000.

Mit Hilfe einer niederfrequenten Abtastung ($\leq$ 1 MHz) des NF-Signals ist der Abstand von Start- und Stoppuls leicht zu messen; er ist proportional zur bestimmenden Messstrecke.

Die Vorteile des erfindungsgemässen 1-Kanal-Heterodyne-Systems können wie folgt formuliert werden:

a) Es sind keine schaltbaren optischen Komponenten für den internen und externen Lichtweg notwendig.

b) Die Anordnung ist unempfindlich gegen Übersprechen. Das Übersprechen kann beispielsweise sogar den Startpuls darstellen. Zudem kann der Stoppuls durch geeignete Wahl der Pulsraten so gewählt werden dass dieser nicht gleichzeitig mit dem Übersprech-Puls stattfindet.

c) Die Auswertung des Empfangssignals ist aufgrund der Zeitdehnung im niederfrequenten Bereich realisierbar. Alle zeitlichen Messfehler werden um den Dehnungsfaktor reduziert.

d) Da Start- und Stoppuls über dieselbe Sende- und Empfangselektronik geführt werden ist deren Signal-Laufzeit irrelevant und beeinflusst die Distanzmessung nicht.

e) Eine signifikante zeitliche Drift ist nicht vorhanden. Start- und Stoppuls finden kurz nacheinander statt und sind den gleichen internen und externen Laufzeiten unterworfen sind.

f) Es können aufgrund der hohen Pulsfrequenzen und dadurch entsprechend niedriger optischer Spitzenleistungen cw-Halbleiterlaser mit guten Bündeleigenschaften verwendet werden.

g) Emittiert der Laser sichtbare Strahlung, so ist wegen der hohen Laserimpulsfrequenz die mittlere optische Leistung genügend stark, um auf dem Zielobjekt einen deutlich erkennbaren Lichtfleck zu erzeugen.

Spezifische Weiterbildungen des erfindungsgemässen 1-Kanal-Heterodyne-Systems sind beispielsweise durch folgende Massnahmen möglich:

a) durch die hohe Repetitionsfrequenz fällt der Stoppuls bei vielen Distanzen mit einem Startpuls zusammen, so dass sich die beiden Pulse gegenseitig stark beeinflussen und nicht einfach voneinander getrennt werden können. Es können jedoch für jede Messdistanz Pulsfrequenzen gefunden oder selektiert werden, bei denen der Stoppuls in eine Lücke zwischen den Startpulsen zu liegen kommt.

b) Für die Grobdistanzbestimmung werden ähnlich wie beim Phasenmesser nahe beieinander liegende Frequenzen ausgewertet. Wegen der Einschränkung unter a) können aber nicht immer beliebig kleine Frequenzschritte gemacht werden, die ein sicheres, aber ungenaues Messen bei schlechten Bedingungen erlauben würden.

Durch die hohe Puls-Repetitionsfrequenz fällt der Stoppuls bereits bei einer Distanz von lediglich 1 bis 10 m mit einem nachfolgenden Startpuls zusammen. Es ist somit ab dieser Distanz mehr als nur ein Lichtpuls unterwegs. Das Problem ist nun ähnlich wie bei der Phasenmessung die Anzahl der Pulse die sich zwischen Sender und Empfänger befinden zu bestimmen. Dabei stellt das Zusammenfallen von einem Stoppuls mit einem Startpuls ein besonderes Problem dar. Abhängig vom jeweiligen Frequenzkonzept tritt diese Kollision bei vielen oder aber auch nur bei wenigen Distanzen auf. Liegen zwei Pulse übereinander oder berühren sie sich, so besteht eine gegenseitige Beeinflussung, insbesondere der Laufzeit. In diesem Fall ist es nicht mehr möglich die Pulse hinreichend präzise voneinander zu trennen, eine Zeitmessung mit genügender Genauigkeit ist nicht erreichbar.

Durch eine optimierte Wahl von Pulsrepetitionsfrequenzen kann der Eindeutigkeitsbereich und damit der Messbereich eines 1-Kanal-Heterodyne-Systems über eine Pulsperiode $T_i$ oder einen Pulsabstand $L_i = (c/2)*T_i$ hinaus erweitert werden. c bedeutet dabei die Lichtgeschwindigkeit. Bei bisherigen Laufzeitmessern entspricht der längste Pulsabstand $L_i$ dem maximalen Eindeutigkeitsbereich und würde bei den hohen Pulsfrequenzen lediglich 1 bis 10 m betragen.

Erfindungsgemäss wird zur Erweiterung des Eindeutigkeitsbereichs die Distanz mit mindestens zwei, bei einem grösseren gewünschten Eindeutigkeitsbereich mit mehreren verschiedenen Puls-Repetitionsfrequenzen gemessen. Aufgrund der Empfangssignalform kann entschieden werden, welche der Pulsrepetitionsfrequenzen ungestörte Stoppulse aufweisen, und damit für die Zeitmessung geeignet sind. Die Empfangssignalform ist dann brauchbar, wenn die beiden Signalpulse, d.h. Start- und Stoppulse, getrennt nebeneinander liegen. Berühren sie sich hingegen oder liegen sogar übereinander, dann kann das Empfangssignal für eine Auswertung unbrauchbar sein.

Damit mit möglichst wenig Frequenzumschaltungen, bzw. möglichst wenig nutzlosen Frequenzen gearbeitet werden kann, können deren Pulsabstände vorteilhafterweise nach dem zahlentheoretischen Grundsatz der Vermeidung eines gemeinsamen Vielfachen im Distanzbereich gewählt werden.

Für den praktischen Fall bedeutet dies, die Frequenzen oder Pulsabstände $L_i$, und $L_j$ sind so zu wählen, dass sich zwar die den unterschiedlichen Frequenzen zugeordneten Stoppulse nahe kommen aber nicht überlappen dürfen. Sind also zwei Stoppulse der Frequenzen mit Pulsabständen $L_i$, $L_j$ benachbart,

$$\left| N_i \cdot L_i - N_j \cdot L_j \right| < \tfrac{1}{2} \cdot \min(L_i, L_j) \tag{1}$$

so sollten sie sich im gewünschten Eindeutigkeitsbereich $D_{max}$ nicht oder zumindest an möglichst wenigen Pulsabstandsintervallen $L_i$, $L_j$ berühren:

$$N_i \cdot L_i < N_j \cdot L_j - 2 \cdot Pulsbreite \qquad \text{wenn} \quad N_i \cdot L_i \leq N_j \cdot L_j \tag{2}$$

$$N_i \cdot L_i > N_j \cdot L_j + 2 \cdot Pulsbreite \qquad \text{wenn} \quad N_i \cdot L_i \geq N_j \cdot L_j$$

und zwar für den Distanzbereich:

$$N_i \cdot L_i < D\max \quad \text{und} \quad N_j \cdot L_j < D\max \tag{3}$$

Die Grössen $N_i$, $N_j$ bedeuten dabei ganze positive Zahlen, sie umfassen typischerweise die natürlichen Zahlen bis 500.

Die Forderung (2) kann jedoch wegen der limitierten Frequenzbandbreite des Synthesizers (beispielsweise 33MHz+/- 5MHz) kaum über den gesamten Distanzbereich gem. Gleichung (3) erfüllt werden. Eine Gruppe oder Menge von Frequenzen beziehungsweise Pulsabständen $L_i$, $L_j$ kann als optimal angesehen werden, falls die Frequenz-Menge die Forderung (2) möglichst wenig verletzt (Minimum-Prinzip). Natürlich gibt es weitere bekannte mathematische Methoden, um die Forderung (2) möglichst optimal über das Intervall (3) zu erfüllen. Auch im Fall von mehr als einem Zielobjekt im Messstrahl ist Forderung (2) noch gültig.

Anstelle eines statischen Frequenzsets kann auch eine flexible, von der jeweiligen Messdistanz abhängige Freqüenzstrategie benutzt werden. Die Menge der Laserpulsfrequenzen kann beispielsweise fünf fest vorgegebene Frequenzen und eine frei wählbare Frequenz umfassen. Mit den fünf fest vorgegebene Frequenzen wird eine Grobdistanzmessung und anschliessend mit einer günstig gewählten Laserpulsfrequenz die Präzisionsdistanzmessung durchgeführt, sodass sich deren Start- und Stoppuls nicht überlagern oder berühren. Dabei kann die adaptive Frequenz beispielsweise so gewählt werden, dass der Stoppuls zwischen das erste und dritte Viertel der Pulsintervalls $L_i$ fällt:

$$\left| x_i \right| \in \left\{ \tfrac{1}{4} .. \tfrac{3}{4} \right\} \tag{4}$$

mit $x_i$ (Zyklus) als Messgrösse für den Abstand zwischen Start- und Stoppuls geteilt durch das Intervall $L_i$.

Die gesuchte Distanz errechnet sich dann nach:

$$D = N_i \cdot L_i + x_i \cdot L_i \tag{5}$$

mit der Messgrösse $x_i$ als Zyklus im Intervall $L_i$ und $N_i$ die Anzahl der Laserimpulse im Distanzbereich.

Zur Lösung der Mehrdeutigkeit $N_i$, d.h. der Anzahl der Sendepulse zwischen Instrument und Zielobjekt, gibt es mehrere numerische Methoden. So sind aus der Radar- oder GPS-Satelliten-Vermessungstechnik verschiedene geeignete Verfahren bekannt. Hier erwähnt seien beispielsweise die Methoden der Differenzbildung, der Linearkombination (LK), insbesondere die Narrowlane-LK oder die Widelane-LK.

Für den Fall, dass der zugeordnete, synthetische Pulsabstand $L_w$ einer Widelane-LK den Eindeutigkeitsbereich $D_{max}$ übertrifft, so ist für diese LK mit dem zugeordneten Pulsabstand $L_w$ $N_w$=0 und die Mehrdeutigkeit $N_i$ für alle

Frequenzen oder Pulsabstände $L_i$ sofort lösbar.

$$N_i = < x_w \frac{L_w}{L_i} > \qquad\qquad (6)$$

Die eckige Klammer bedeutet dabei Rundung auf die nächste kleinere ganze Zahl. Natürlich sind dem Fachmann weitere Methoden bekannt.

Eine weitere Fortbildung erlaubt die genaue Bestimmung bzw. Feinmessung des Laufzeitunterschieds oder Zyklus $x_i$ zwischen Start- und Stoppuls im Pulsintervall $L_i$. Die Signalpulse (Zeitsignal) sind als zeitlich diskret abgetastete Daten in einem Speicher abgelegt. Die Zeitauflösung, oder genauer gesagt die Distanzauflösung von Abtastwert zu Abtastwert, beträgt typischerweise 10 mm bis 100 mm. Um eine sub-mm-Auflösung zu erreichen ist daher eine Zeitinterpolation zwischen den Abtastwerten notwendig. Eine Methode nicht nur mit hoher Auflösung sondern auch mit genügender Genauigkeit ist die Kreuzkorrelation des Empfangssignalpulses mit einem der Messung vorgängig aufgenommenen Referenzsignals. Dabei wird die Superposition von zwei Referenzpulsen mit dem digitalisierten Messsignal kreuzkorreliert. Interpolation ist dabei durch eine Überabtastung des Referenzsignals als auch durch funktionale Ausgleichsrechnung möglich.

Trotz der Auswertung der Oberwellen des NF-transformierten Empfangssignals geht durch die Zeitdehnung des Empfangssignals (Start - und Stoppuls) ein grosser Teil der im ursprünglichen HF-Signal vorhandenen Zeit- bzw. Distanzinformation verloren. Es wird somit das Nyquistkriterium verletzt, wenn nicht pro Periode der höchsten Oberwelle der HF - Empfangspulse mindestens zwei Abtastpulse vorhanden sind. Dieser Verlust kommt durch das Heterodyne-Prinzip zustande, bei dem, ähnlich wie in einem Subsamplingsystem, zwischendurch HF- Empfangspulse nicht von einem Mischerpuls (=Abtastpuls) getroffen werden. Die Laufzeit-Informationen dieser HF-Empfangspulse werden von der heterodynen Zeit- oder Frequenztransformation nicht erfasst und tragen daher nichts zum NF- Signal bei, weil sie in die Mixer-Lücken fallen.

Das erfindungsgemässe Minimal-Loss-Time-Expansion-Prinzip macht nun diesen Verlust an Signalinformation wett, indem die HF-Empfangspulse gleichzeitig parallel mit wenigstens zwei, vorzugsweise aber mehreren, gegeneinander phasenverschobenen Mischerpulssignalen auf mehrere separate NF- Signale heruntergemischt werden. Diese mehreren NF-Signale können nun phasenrichtig aufeinander aufaddiert und zu einem einzigen Empfangssignal zusammengeführt werden. Weil in diesem parallelen Mischer-System die Rauschbeiträge nicht korreliert sind, verbessert sich das Signal/Rauschverhältnis mit der Anzahl der Mischerkanäle.

Die optimale Anzahl der verschiedenphasigen Mischersignale hängt von der Pulsdauer und der Impulsperiode $T_i$ der hochfrequenten aber bandlimitierten Empfangssignale , insbesondere des Empfangssignals mit der höchsten Frequenz ab. Die maximale Anzahl der Mischerkanäle entspricht dem doppelten des Quotienten von Impulsperiode zu Pulsbreite (Pulsdauer). Diese mehreren, an den Ausgängen der Mischerkanäle austretenden Niederfrequenz-Signale können nun phasenrichtig aufeinander aufaddiert werden.

Die erfindungsgemässe Distanzmessvorrichtung bzw. das Distanzmessverfahren wird nachfolgend anhand von in der Zeichnung schematisch dargestellten Ausführungsbeispielen rein beispielhaft näher beschrieben oder erläutert. Im einzelnen zeigen

Fig.1    die schematische Darstellung des Blockschemas einer ersten Ausführungsform der erfindungsgemässen Vorrichtung;

Fig.2    die schematische Darstellung des Blockschemas einer zweiten Ausführungsform der erfindungsgemässen Vorrichtung mit einer gegenüber einem Phasenmesser gesteigerten Empfindlichkeit;

Fig.3    die Darstellung der Signale vor und nach dem hochfrequenten, heterodynen Mischen.

Fig.4    die Darstellung der Signale vor und nach dem hochfrequenten, heterodynen Mischen mit vergrössertem Massstab.

Fig.5    die Darstellung der Signale vor und nach dem hochfrequenten, heterodynen Mischen mit vergrössertem Massstab und mit der Darstellung des transformierten Startpulses.

Fig.6    die Darstellung einer in den Niederfrequenzbereich transformierten NF- oder LF-Signalimpulsfolge bestehend aus Start- und Stoppuls.

Fig.7    die schematische Darstellung des Effekts der heterodynen Unterabtastung.

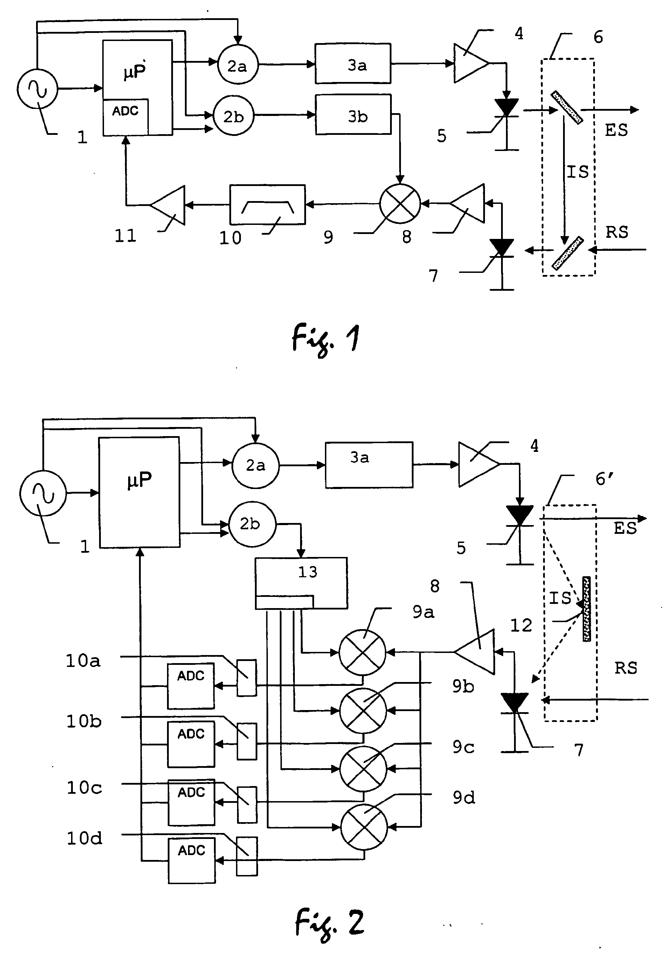

Das in Fig.1 schematisch dargestellte Blockschema einer ersten Ausführungsform der erfindungsgemässen Vorrichtung zeigt die wesentlichen Bausteine eines 1-Kanal-Heterodyne-Systems. Am Anfang der Signalkette steht ein quarzgenauer Referenzoszillator mit einer typischen Ganggenauigkeit von 0.5 ...5ppm. Im Sendekanal befindet sich ein sogenannter direkt-digitaler Frequenzsynthesizer 2a. Je nach Programmierung durch den Mikrocontroller oder Mikroprozessor $\mu$P erzeugt Element 2a die gewünschte Frequenz im Bereich von einigen kHz oder MHz.

Der Frequenzumwandler 3a ist ebenfalls dem Sendekanal zugeordnet und multipliziert die Frequenz in höhere Bereiche, so dass die Messfrequenz $F_i$ resultiert. Zudem wirkt der Frequenzwandler 3a als Filter und gewährleistet die spektrale Signalreinheit. Eine Treiberstufe 4 wandelt die Steuerfrequenz in elektrische Pulse kurzer Dauer um und treibt die Lichtquelle 5, wie z.B. eine Laserdiode. Ein Teil des Lichtimpulses wird als emittiertes Signal ES auf das zu vermessende Zielobjekt gerichtet, der andere Teil wird als internes Signal IS über einen Strahlteiler direkt auf den optischen Empfänger geleitet. Die Anordnung 6 entspricht dem internen Referenzlichtweg, mittels welchem die jeweiligen Startpulse erzeugt werden. Im einfachsten Realisierungsfall genügt bereits das Streulicht vom Sender auf den optischen Empfänger als Referenzlichtweg, bei diesem Aufbau ist kein Strahlteiler notwendig. Die vom Zielobjekt reflektierten und empfangenen Lichtimpulse werden als reflektierte Signale RS simultan bzw. parallel demselben optischen Empfänger 7 zugeleitet und bilden die Stoppimpulse.

Die hochfrequenten Start- und Stoppimpulse werden nachfolgend über einen Verstärker 8 von einem elektronischen Mischer 9 hoher Bandbreite, welcher seinerseits durch ein hochfrequentes Pulssignal, aber mit gegenüber dem Senderkanal leicht unterschiedlicher Frequenz, gesteuert wird, analog abgetastet. Es handelt sich dabei um eine Unterabtastung mit phasentreuem Zeitdehnungseffekt. Das zeitgedehnte Signal wird erst am Ausgang des nachgeschalteten Tiefpass 10 verfügbar. Das Mischersteuersignal wird erzeugt durch einen zweiten Sektor des Synthesizers, wobei dieser beispielsweise wiederum aus einem direkt-digitaler Frequenzsynthesizer 2b besteht, dessen Frequenz durch denselben Mikrocontroller oder Mikroprozessor$\mu$ P zeitlich phasentreu zum ersten Frequenzsynthesizer 2a gesteuert wird.

Das zeitgedehnte Empfangssignal wird durch einen AD-Wandler ADC mit einer hinreichend schnellen Abtastrate im kHz bis MHz-Bereich digitalisiert und im Speicher abgelegt.

Für jede Laser-Pulsfrequenz $F_i$ wird die zeittransformierte relative Verzögerung $x_i$ zwischen dem Stoppuls und dem Startpuls im Verhältnis zum zeittransformierten Pulsabstand $T_i$ als Messgrösse berechnet. Die zeitliche Interpolation zwischen den Abtaststellen erfolgt nach der Methode der Kreuzkorrelation oder einer funktionalen Ausgleichmethode.

Die Lösung der Mehrdeutigkeit $N_i$, d.h. der Anzahl der Lichtpulse zwischen Instrument und Zielobjekt erfolgt - wie oben beschrieben - beispielsweise nach der Methode der Differenzbildung der Messwerte $x_i$. Diese Werte sind langen Impulsperioden zugeordnet, welche vergleichbar sind mit der Länge des Eindeutigkeitsbereichs $D_{max}$. Die Mehrdeutigkeitsfestsetzung beschränkt sich dadurch auf einen kleinen Suchraum, mit welchem der korrekte Satz an Mehrdeutigkeitsparametern $N_i$ rasch gefunden werden kann. Die praxisrelevanten Strategien die Mehrdeutigkeit aus den relativen Verzögerungen $x_i$ zu bestimmen sind dem Fachmann, z.B. aus der Auflösung von Phasenmehrdeutigkeiten in der GPS-Algorithmik, bekannt.

Fig.2 stellt ein Blockschema einer zweiten Ausführungsform der erfindungsgemässen 1-Kanal-Heterodyne-Vorrichtung mit einer gegenüber Figur 1 und insbesondere einem Phasenmesser wesentlich gesteigerten Empfindlichkeit dar.

Die Baugruppen entsprechen - bis auf die heterodyne Hochfrequenzmischerstufe - im wesentlichen dem in Fig.1 gezeigten Ausführungsbeispiel. Jedoch wird der interne Referenzlichtweg 6' über eine reflektierende Fläche 12 geführt, durch die das interne Signal IS auf den optischen Empfänger 7 geleitet wird. Eine solche reflektierende Fläche 12 kann beispielsweise durch die Innenseite des Gerätegehäuses gebildet werden, so dass ein definierter Reflex als internes Signal IS dient.

Mit mehreren parallel angeordneten Mischerbausteinen 9a, 9b, 9c, 9d kann der verlustbehaftete Effekt der Signalunterabtastung behoben werden. Bei dieser erweiterten Vorrichtung erzeugt die Frequenzumwandlerstufe 13 beispielsweise vier hochfrequente, zum Sendekanal wiederum leicht frequenzverschobene Steuersignalimpulse. Die Phasen dieser Steuersignale ist in ganzzahligen Schritten von ($2\pi$/Anzahl Steuersignale) gegeneinander verschoben.

Die Mischerbausteine 9a, 9b, 9c, 9d erzeugen daher auch um diese Phasenschritte verzögerte Signale an deren mit den Tiefpassfiltern 10a, 10b, 10c, 10d zugeordneten Ausgängen. Die zeittransformierten Signale werden praktisch zeitgleich digitalisiert und vom Mikroprozessor $\mu$P im Speicher abgelegt. In einer anderen Ausführungsform können die analogen Ausgangssignale auch phasenrichtig summiert und erst anschliessend digitalisiert werden.

Der durch Unterabtastung erfolgte Verlust am Signal-Rausch-Verhältnis wird im Rahmen eines Postprocessings behoben, indem die in diesem Beispiel 4 digitalen Signalimpulsfolgen phasenrichtig und zwar in ganzzahligen Schritten von ($2\pi$/Anzahl Steuersignale) zu einer einzigen Signalimpulsfolge additiv akkumuliert werden.

Für jede zeitgedehnte, akkumulierte Pulsfrequenz wird analog zu Fig.1 die zeittransformierte relative Verzögerung $x_i$ zwischen dem Stoppuls und dem Startpuls im Verhältnis zum zeitgedehnten Pulsabstand als Messgrösse berechnet. Die zeitliche Interpolation zwischen den Abtaststellen des akkumulierten Signalimpulssignals erfolgt wiederum nach der Methode der Kreuzkorrelation, Fouriertransformation oder eines funktionalen Ausgleichsalgorithmus.

Die besonders vorteilhaften Eigenschaften dieser Distanzmessvorrichtung sind die mit einem Laufzeitmesser vergleichbare Messempfindlichkeit und die mit einem Phasenmesser vergleichbare Messgenauigkeit.

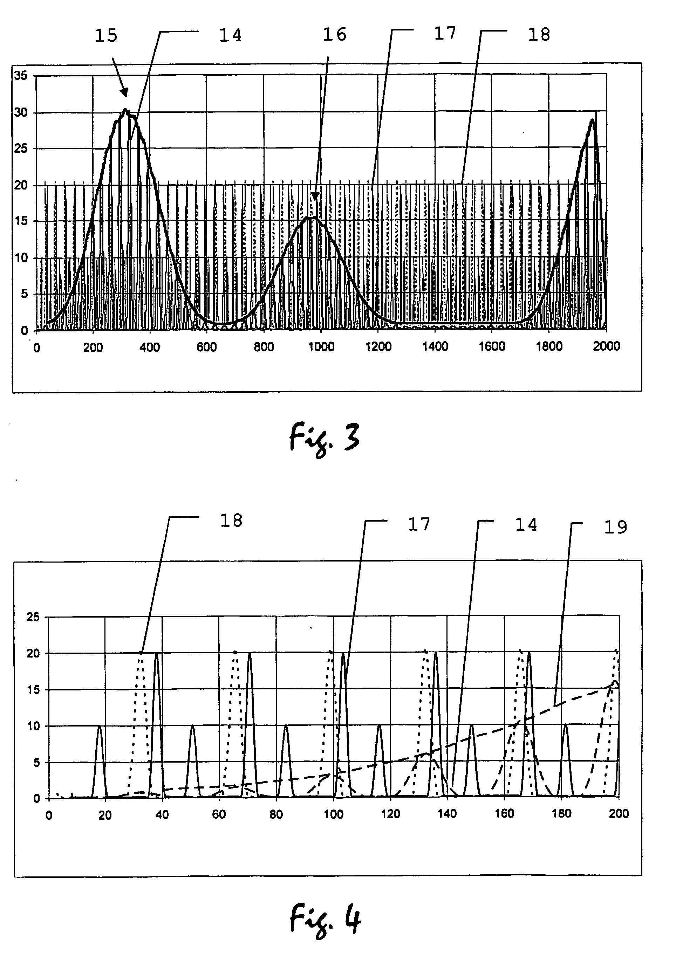

Fig.3 zeigt die Darstellung der Signale vor und nach dem hochfrequenten, heterodynen Mischen. Das HF-Empfangs-Signal 17 mit der Pulsperiode $T_i=1/F_i$ besteht aus Start- und Stoppulsen und wird durch ein aus Einfachpulsen bestehendes Mischersignal 18 mit einer zur Pulsperiode $1/F_i$ leicht verschobenen Frequenz elektrisch analog gemischt. Am Ausgang des Mischers entsteht ein amplitudenmoduliertes Ausgangssignal 14 mit einer unterlegten hochfrequenten Trägerfrequenz. Die Einhüllende dieses Ausgangssignals 14 weist zwei Signalimpulse auf, der eine ist dem zeittransformierten Startpuls 15 und der andere dem zeittransformierten Stoppuls 16 zugeordnet. Mit der Zeitdehnung der Signale wird - wie bei der herkömmlichen Phasenmessung - der Vorteil ausgenutzt, dass mit kostengünstigen elektronischen Bauteilen und niedrigem Stromverbrauch die Signale im Niederfrequenzbereich weiter verarbeitet und digitalisiert werden können. Zudem wird der. Einfluss der systematischen Laufzeitfehler der elektronischen Bauteile um den Zeitdehnungsfaktor der Mischerstufe reduziert, was die Messgenauigkeit der Vorrichtung erheblich fördert.

Fig.4 zeigt einen Ausschnitt der Signale von Fig.3 in zeitgedehnter Darstellung. Hier ist gezeigt, wie der Stoppuls im HF-Empfangs-Signal 17 nicht und der Startpuls lediglich teilweise verstärkt wird. Es wird daher nur der Startpuls zum Ausgang des Mischers geleitet, der Stoppuls geht in dieser Phase verloren. Am Ausgang des Mischers entsteht ein Ausgangssignal 14 mit vergleichbar hoher Frequenz aber mit zusätzlicher Amplitudenmodulation. Dargestellt ist auch die Einhüllende 19 des Ausgangssignals 14.

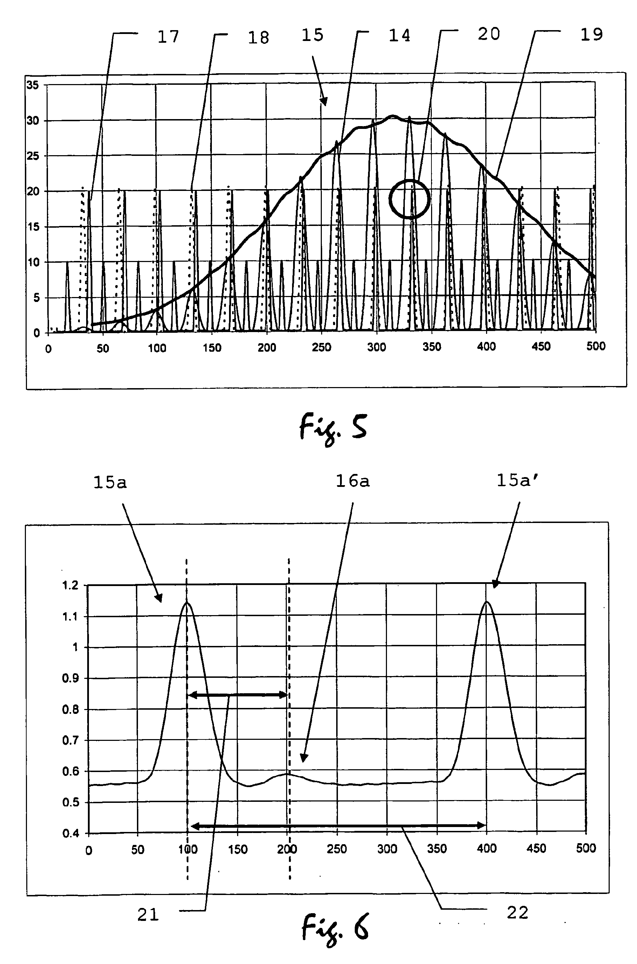

In Fig.5 erfolgt ebenfalls die Darstellung eines vergrösserten Ausschnitts von Fig.3, zudem ist die Einhüllende 19 bzw. der tiefpassgefilterte und zeitgedehnte Startpuls 15 abgebildet. In der exemplarisch dargestellten Region 20 ist die Erfassung des Startpulses im Empfangssignal 17 durch das Mischersignal 18 und damit die Weiterleitung an den Ausgang erkennbar. Der zeitverschobene, kleinere Stoppuls im Empfangssignal 17 wird hingegen in dieser Phase vom Mischersignal 18 nicht erfasst und erscheint daher nicht am Ausgang des Mischers. Weitergeleitet wird ein hochfrequentes, amplitudenmoduliertes Ausgangssignal 14 von welchem die Einhüllende 19 das zeittransformierte Start- oder Stoppsignal beschreibt.

Fig.6 zeigt die Darstellung eines in den Niederfrequenzbereich transformierten Empfangssignals. Die Periode einer Signalimpulsfolge umfasst einen ersten Startpuls 15a und einen Stoppuls 16a, wobei in dieser Darstellung auch ein mit einem zeitgedehnten Pulsabstandsintervall 22 als $L_i$ nachfolgender zweiter Startpuls 15a' erkennbar ist. Die zu bestimmende Messgrösse ist hierbei die Zeit, d.h. die Verzögerung 21, zwischen erstem Startpuls 16a und dem Stoppuls 15b. Nach einer Abtastung mittels eines AD-Wandlers kann die Verzögerung 21 und damit der Zyklus $x_i$ als Verhältnis zwischen Verzögerung 21 und $T_i = L_i/c$ berechnet werden. Die Distanzberechnung zum Zielobjekt wird mittels der oben angeführten Beziehung (5) durchgeführt

$$D = N_i \cdot L_i + x_i \cdot L_i$$

Im Fall von Mehrfachzielen erscheinen neben dem einen ersten weitere Stoppulse deren Zyklen $x_i$ bei jeder Modulationssendefrequenz $F_i$ separat gemessen werden können. Die Möglichkeit auf gestaffelte Zielobjekte Distanz messen zu können ist eine besondere Stärke der erfinderischen Vorrichtung.

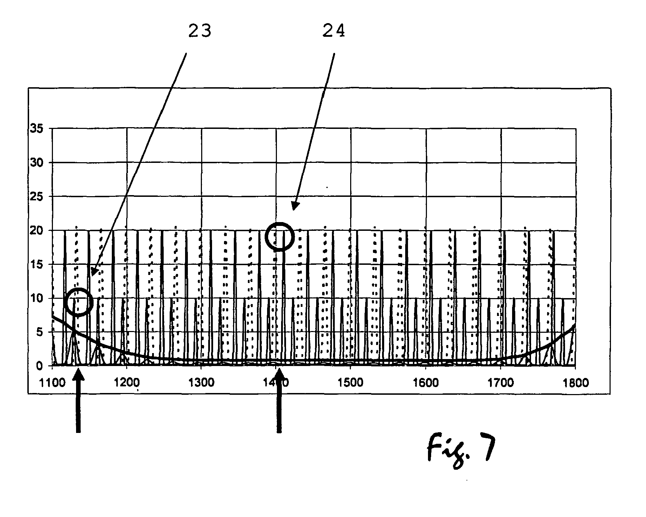

Fig.7 verdeutlicht den Effekt der heterodynen Unterabtastung. Umfasst die Vorrichtung nur einen Hochfrequenzmischer, so geht ein Teil der Signalenergie verloren. Dieser verlustbehaftete Effekt ist an den Stellen 24 ersichtlich, an denen der Steuerimpuls des Mischers zwischen Start- und Stoppuls fällt. Um dies zu vermeiden werden im Empfangskanal mehrere Mischerbausteine parallel nebeneinander verwendet. Die Phasen der Steuersignale sind dabei um den Bruchteil der Anzahl der parallelen Mischer gegeneinander verschoben. Dadurch wird gewährleistet, dass mindestens einer der Mischer pro Pulsperiode $T_i$ eine effektive Signalabtastung 23 durchführt und dadurch keine Signalenergie verloren geht. Die Empfindlichkeit einer solchen Empfangsvorrichtung erreicht diejenige eines gepulsten Laufzeitmessers und unterscheidet sich daher erheblich von derjenigen eines herkömmlichen Phasenmessers.

Es versteht sich für den Fachmann, dass die verschiedenen Anordnungen von Komponenten oder Prinzipien miteinander in alternativer oder ergänzender Weise kombiniert werden können. Auch können die Ausführungsbeispiele der Vorrichtungen in heterodyner oder homodyner Bauweise ausgestaltet werden.

**Patentansprüche**

1. Hochpräzises Distanzmessverfahren mit den Schritten

Aussenden von gepulster elektromagnetischer Strahlung (ES), insbesondere von Licht, mit wenigstens einer Puls-Repetitionsfrequenz über

eine geräteexterne Messstrecke auf wenigstens ein zu vermessendes Ziel und

über eine geräteinterne Referenzstrecke (6), wobei die über die Referenzstrecke (6) geführte Strahlung (IS) wenigstens einen Startpuls und die über die Messstrecke geführte Strahlung (RS) wenigstens einen Stoppuls definieren,

Empfangen der vom Ziel zurückgestreuten Strahlung (RS) und der über die Referenzstrecke geführten Strahlung (IS), wobei die vom Ziel zurückgestreute Strahlung (RS) und die über die Referenzstrecke geführte Strahlung (IS) parallel erfaßt werden, insbesondere von einem gemeinsamen Empfänger (7), so dass das Empfangssignal (17) Anteile der vom Ziel zurückgestreuten Strahlung (RS) und der über die Referenzstrecke geführten Strahlung (IS) aufweist, und die Strahlung in ein Empfangssignal (17) umgewandelt wird,

Bestimmen wenigstens einer Distanz zu dem wenigstens einen Ziel aus dem Empfangssignal (17),

**dadurch gekennzeichnet, dass**

wenigstens zwei Puls-Repetitionsfrequenzen, insbesondere vier Puls-Repetitionsfrequenzen, so gewählt werden, dass deren zugeordnete Pulsabstände kein gemeinsames Vielfaches im Größenordnungsbereich der maximalen externen Messstrecke aufweisen.

2. Distanzmessverfahren nach Anspruch 1,
**dadurch gekennzeichnet, dass**
das Empfangssignal (17) auf ein Ausgangssignal (14) mit einer gegenüber der Puls-Repetitionsfrequenz niedrigeren Frequenz heruntergemischt wird.

3. Distanzmessverfahren nach einem der vorangehenden Ansprüche,
**dadurch gekennzeichnet, dass**
die wenigstens zwei Puls-Repetitionsfrequenzen, insbesondere vier Puls-Repetitionsfrequenzen, innerhalb einer vorgegebenen Frequenzbandbreite so gewählt werden, dass für möglichst viele Kombinationen der zugeordneten Pulsabstandsintervalle (22) $L_i$ und $L_j$ die Bedingung

$$\left| N_i \cdot L_i - N_j \cdot L_j \right| \geq 2 \cdot Pulsbreite$$

erfüllt werden, wobei $N_i$ und $N_j$ ganze positive Zahlen mit

$$\left| N_i \cdot L_i - N_j \cdot L_j \right| < \frac{1}{2} \cdot \min(L_i, L_j)$$

bezeichnen, insbesondere mit $N_i, N_j < 500$.

4. Distanzmessverfahren nach einem der vorangehenden Ansprüche,
**dadurch gekennzeichnet, dass**
wenigstens eine Puls-Repetitionsfrequenz variabel und abhängig von der jeweiligen Messdistanz derart gewählt wird, dass sich deren Start- und Stoppuls weder überlagern noch berühren.

5. Distanzmessverfahren nach einem der vorangehenden Ansprüche,
**dadurch gekennzeichnet, dass**
eine Kreuzkorrelation wenigstens eines Pulses des niederfrequenten Empfangssignals (14) mit einem Referenzsignal erfolgt, insbesondere mit einem synthetisch erzeugten oder aus einer vorangehenden Messung abgespeicherten Referenzsignal.

6. Distanzmessverfahren nach einem der vorangehenden Ansprüche,
**dadurch gekennzeichnet, dass**
das Empfangssignal (17) gleichzeitig parallel mit wenigstens zwei gegeneinander phasenverschobenen Mischersignalen (18) auf wenigstens zwei niederfrequente Signale heruntergemischt wird.

**7.** Distanzmessverfahren nach Anspruch 6,
**dadurch gekennzeichnet, dass**
die wenigstens zwei niederfrequenten Signale phasenrichtig additiv kombiniert werden.

**8.** Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 7, insbesondere wenn das Programm in einem Computer ausgeführt wird.

**9.** Distanzmessvorrichtung zur Durchführung des Verfahrens nach einem der Ansprüche 1 bis 7 mit wenigstens einer gepulsten Strahlungsquelle (5) zur Erzeugung und zur Emission von Strahlung (ES), insbesondere von Licht, wobei die Strahlungsquelle (5) so ausgelegt ist, dass die Strahlung mit wenigstens zwei, insbesondere vier oder fünf, Puls-Repetitionsfrequenzen emittierbar ist,
einer geräteinternen Referenzstrecke (6), wobei die Strahlung zeitgleich über eine geräteexterne Messstrecke auf wenigstens ein zu vermessendes Ziel und über die geräteinterne Referenzstrecke (6) emittierbar ist,
einem, insbesondere einzigen, Empfänger (7) zum Empfang und zur Umwandlung von Strahlung in wenigstens ein Empfangssignal (17), wobei die vom Ziel zurückgestreute Strahlung (RS) und die über die Referenzstrecke geführte Strahlung (IS) gemeinsam erfaßt werden, so dass das Empfangssignal (17) Anteile der vom Ziel zurückgestreuten Strahlung (RS) und der über die Referenzstrecke geführten Strahlung (IS) aufweist,
einem Signal-Prozessor ($\mu$P) zur Verarbeitung der Signale,
**dadurch gekennzeichnet, dass**
den Puls-Repetitionsfrequenzen zugeordnete Pulsabstände kein gemeinsames Vielfaches im Größenordnungsbereich der maximalen externen Messstrecke aufweisen.

**10.** Distanzmessvorrichtung nach Anspruch 9,
**dadurch gekennzeichnet, dass**
die Puls-Repetitionsfrequenzen so gewählt sind, dass es im Größenordnungsbereich der maximalen externen Messstrecke wenigstens zwei Puls-Repetitionsfrequenzen gibt, deren Stoppulse sich zeitlich nicht berühren oder überlappen.

**11.** Distanzmessvorrichtung nach Anspruch 10,
**dadurch gekennzeichnet, dass**
die Puls-Repetitionsfrequenzen so gewählt sind, dass für möglichst viele Kombinationen der zugeordneten Pulsabstandsintervalle (22) $L_i$ und $L_j$ die Bedingung

$$\left| N_i \cdot L_i - N_j \cdot L_j \right| \geq 2 \cdot Pulsbreite$$

erfüllt werden, wobei $N_i$ und $N_j$ ganze positive Zahlen mit

$$\left| N_i \cdot L_i - N_j \cdot L_j \right| < \frac{1}{2} \cdot \min(L_i, L_j)$$

bezeichnen, insbesondere mit $N_i, N_j < 500$ .

**12.** Distanzmessvorrichtung nach Anspruch 9, 10 oder 11,
**gekennzeichnet durch**
wenigstens einen Mischer (9,9a-d) zum Heruntermischen des Empfangssignals (17) auf ein niederfrequentes Ausgangssignal (14).

**13.** Distanzmessvorrichtung nach Anspruch 12,
**gekennzeichnet durch**
einen pulsartig betriebenen Analog-Mischer als Subsampler zur Zeitdehnung des Empfangssignals (17).

**14.** Distanzmessvorrichtung nach einem der Ansprüche 9 bis 13,
**dadurch gekennzeichnet, dass**
die Strahlungsquelle (5) ein cw-Halbleiterlaser ist.

**15.** Distanzmessvorrichtung nach einem der Ansprüche 9 bis 14,
**gekennzeichnet durch**
wenigstens zwei mit unterschiedlicher Phase betriebene, parallel geschaltete elektronische Signal-Mischer als mehrkanalige Heterodyn-Anordnung.

**Claims**

**1.** High-precision distance measurement method having the following steps:

transmission of pulsed electromagnetic radiation (ES), particularly of light, at at least one pulse repetition rate via
an appliance-external measurement section to at least one destination that is to be surveyed and
via an appliance-internal reference section (6), wherein the radiation (IS) routed via the reference section (6)
defines at least one starting pulse and the radiation (RS) routed via the measurement section defines at least
one stopping pulse,
reception of the radiation (RS) scattered back from the destination and of the radiation (IS) routed via the
reference section, wherein the radiation (RS) scattered back from the destination and the radiation (IS) routed
via the reference section are detected in parallel, particularly by a common receiver (7), so that the received
signal (17) has components of the radiation (RS) scattered back from the destination and of the radiation (IS)
routed via the reference section, and the radiation is converted into a received signal (17),
determination of at least one distance to the at least one destination from the received signal (17), **characterized
in that**

at least two pulse repetition rates, particularly four pulse repetition rates, are chosen such that the associated pulse
intervals thereof do not have a common multiple in the range of magnitude of the maximum external measurement
section.

**2.** Distance measurement method according to Claim 1, **characterized in that**
the received signal (17) is down-converted to an output signal (14) at a frequency lower than the pulse repetition rate.

**3.** Distance measurement method according to any one of the preceding claims,
**characterized in that**
the at least two pulse repetition rates, particularly four pulse repetition rates, are chosen within a prescribed frequency
bandwidth such that for as many combinations of the associated pulse interval ranges (22) $L_i$ and $L_j$ as possible the
condition

$$|N_i \cdot L_i - N_j \cdot L_j| \geq 2 \cdot Pulse\ width$$

is satisfied, where $N_i$ and $N_j$ denote positive integers with

$$|N_i \cdot L_i - N_j \cdot L_j| < \tfrac{1}{2} \cdot \min\ (L_j \cdot L_j)$$

particularly with $N_i$, $N_j < 500$.

**4.** Distance measurement method according to any one of the preceding claims,
**characterized in that**
at least one pulse repetition rate is chosen variably and on the basis of the respective measurement distance such
that the starting and stopping pulses thereof neither overlap nor touch.

**5.** Distance measurement method according to any one of the preceding claims,
**characterized in that**
at least one pulse of the low-frequency received signal (14) is cross-correlated with a reference signal, particularly with a synthetically produced reference signal or a reference signal stored from a preceding measurement.

**6.** Distance measurement method according to any one of the preceding claims,
**characterized in that**
the received signal (17) is simultaneously down-converted to at least two low-frequency signals in parallel with at least two mixer signals (18) which are phase-shifted relative to one another.

**7.** Distance measurement method according to Claim 6,
**characterized in that**
the at least two low-frequency signals are additively combined in phase.

**8.** Computer program product with a program code, which is stored on a machine-readable carrier or is embodied by an electromagnetic wave, for carrying out the method according to any one of Claims 1 to 7, particularly when the program is executed in a computer.

**9.** Distance measurement apparatus for carrying out the method according to any one of Claims 1 to 7 having at least a pulsed radiation source (5) for producing and emitting radiation (ES), particularly light, wherein the radiation source (5) is designed such that the radiation can be emitted at at least two, particularly four or five, pulse repetition rates, an appliance-internal reference section (6), wherein the radiation can be emitted simultaneously via an appliance-external measurement section to at least one destination that is to be surveyed and via the appliance-internal reference section (6),
a receiver (7), particularly a single receiver, for receiving and converting radiation into at least one received signal (17), wherein the radiation (RS) scattered back from the destination and the radiation (IS) routed via the reference section are detected together, so that the received signal (17) has components of the radiation (RS) scattered back from the destination and of the radiation (IS) routed via the reference section,
a signal processor ($\mu$P) for processing the signals,
**characterized in that**
pulse intervals associated with the pulse repetition rates do not have a common multiple in the range of magnitude of the maximum external measurement section.

**10.** Distance measurement apparatus according to Claim 9,
**characterized in that**
the pulse repetition rates are chosen such that the range of magnitude of the maximum external measurement section contains at least two pulse repetition rates, the stopping pulses of which do not touch or overlap in time.

**11.** Distance measurement apparatus according to Claim 10,
**characterized in that**
the pulse repetition rates are chosen such that for as many combinations of the associated pulse interval ranges (22) $L_i$ and $L_j$ as possible the condition

$$|N_i \cdot L_i - N_j \cdot L_j| \geq 2 \cdot Pulse\ width$$

is satisfied, where $N_i$ and $N_j$ are positive integers with

$$|N_i \cdot L_i - N_j \cdot L_j| < \tfrac{1}{2} \cdot \min\ (L_j \cdot L_j)$$

particularly with $N_i$, $N_j$ < 500.

**12.** Distance measurement apparatus according to Claim 9, 10 or 11,

**characterized by**
at least one mixer (9, 9a-d) for down-converting the received signal (17) to a low-frequency output signal (14).

**13.** Distance measurement apparatus according to Claim 12,
**characterized by**
a pulsed-operation analogue mixer as a subsampler for stretching the received signal (17) in time.

**14.** Distance measurement apparatus according to any one of Claims 9 to 13,
**characterized in that**
the radiation source (5) is a cw semiconductor laser.

**15.** Distance measurement apparatus according to any one of Claims 9 to 14,
**characterized by**
at least two parallel-connected electronic signal mixers operated with a different phase as a multichannel heterodyne arrangement.


**Revendications**

**1.** Procédé de mesure de distance de haute précision, comprenant les étapes consistant à :

<u>envoyer</u> un rayonnement électromagnétique (ES) pulsé, en particulier de lumière, avec au moins une fréquence de répétition d'impulsions,
sur une distance de mesure externe à l'appareil, sur au moins une cible, et
sur une distance de référence (6) interne à l'appareil,
le rayonnement (IS) guidé sur la distance de référence (6) définissant au moins une impulsion de départ et le rayonnement (RS) guidé sur la distance de mesure définissant au moins une impulsion d'arrêt,
<u>recevoir</u> le rayonnement (RS) rétrodiffusé par la cible et le rayonnement (IS) guidé sur la distance de référence, le rayonnement (RS) rétrodiffusé par la cible et le rayonnement (IS) guidé sur la distance de référence étant appréhendés parallèlement, en particulier par un récepteur (7) commun, de manière que le signal de réception (17) présente des parties du rayonnement (RS) rétrodiffusé par la cible et du rayonnement (IS) guidé sur la distance de référence, et le rayonnement étant converti en un signal de réception (17),
<u>déterminer</u> à partir du signal de réception (17) au moins une distance vis-à-vis de la au moins une cible,
**caractérisé en ce qu'**
au moins deux fréquences de répétition d'impulsions, en particulier quatre fréquences de répétition d'impulsions, sont choisies telles que leurs espacements entre impulsions associés ne présentent aucun multiple commun dans le domaine d'ordre de grandeur de la distance de mesure externe maximale.

**2.** Procédé de mesure de distance selon la revendication 1,
**caractérisé en ce que**
le signal de réception (17) est soumis à un mélange abaisseur effectuant un signal de sortie (14) avec une fréquence plus basse par rapport à la fréquence de répétition d'impulsions.

**3.** Procédé de mesure de distance selon l'une des revendications précédentes,
**caractérisé en ce que**
les au moins deux fréquences de répétition d'impulsions, en particulier quatre fréquences de répétition d'impulsions, sont choisies à l'intérieur d'une largeur de bande de fréquences prédéterminée, de manière à satisfaire, pour un nombre maximal de combinaisons des intervalles d'espacement entre impulsions (22) $L_i$ et $L_j$, la condition :

$$\left| N_i \cdot L_i - N_j \cdot L_j \right| \geq 2 \cdot \textit{largeur d'impulsion}$$

sachant que $L_i$ et $L_j$ sont des nombres positifs entiers, avec

$$\left| N_i \bullet L_i - N_j \bullet L_j \right| < 1/2 \bullet \min (L_i, L_j)$$

en particulier $N_i$, $N_j < 500$.

**4.** Procédé de mesure de distance selon l'une des revendications précédentes,
**caractérisé en ce qu'**
au moins une fréquence de répétition d'impulsions est variable et choisie en fonction de la distance de mesure respective, de manière que leurs impulsions de départ et d'arrêt ni ne se superposent, ni n'entrent en contact.

**5.** Procédé de mesure de distance selon l'une des revendications précédentes,
**caractérisé en ce qu'**
une corrélation croisée, d'au moins une impulsion du signal de réception à basse fréquence (14) avec un signal de référence est effectuée, en particulier avec un signal de référence généré de manière synthétique ou mémorisé et provenant d'une mesure précédente.

**6.** Procédé de mesure de distance selon l'une des revendications précédentes,
**caractérisé en ce que**
le signal de réception (17) est simultanément soumis à un mélange abaisseur, parallèlement à au moins deux signaux de mélangeur (18) mutuellement déphasés, à au moins deux signaux à basse fréquence.

**7.** Procédé de mesure de distance selon la revendication 6,
**caractérisé en ce que**
les au moins deux signaux à basse fréquence sont combinés de manière additive avec la phase correcte.

**8.** Produit-programme informatique avec un code de programme, mémorisé sur un support lisible par machine ou matérialisé par un arbre électromagnétique, pour la mise en oeuvre du procédé selon l'une des revendications 1 à 7, en particulier lorsque le programme est exécuté dans un ordinateur.

**9.** Dispositif de mesure de distance pour la mise en oeuvre du procédé selon l'une des revendications 1 à 7, avec au moins une source de rayonnement (5) pulsée, pour générer et pour envoyer un rayonnement (ES), en particulier de la lumière, la source de rayonnement (5) étant conçue de manière que le rayonnement puisse être émis avec au moins deux, en particulier quatre ou cinq, fréquences de répétition d'impulsions,
une distance de référence (6) interne à l'appareil, le rayonnement étant en même temps susceptible d'être émis sur une distance de mesure externe à l'appareil, sur au moins une cible à mesurer, et sur une distance de référence (6) interne à l'appareil,
un récepteur (7), en particulier unique, pour recevoir et pour convertir un rayonnement en au moins un signal de réception (17), le rayonnement (RS) rétrodiffusé par la cible et le rayonnement (IS) guidé sur la distance de référence étant appréhendés conjointement, de manière que le signal de réception (17) présente des parties du rayonnement (RS) rétrodiffusé par la cible et du rayonnement (IS) guidé sur la distance de référence,
un processeur de signal ($\mu$P), pour traiter les signaux,
**caractérisé en ce que**
les espacements entre impulsions associés aux fréquences de répétition d'impulsions ne présentent aucun multiple commun dans le domaine d'ordre de grandeur de la distance de mesure externe maximale.

**10.** Dispositif de mesure de distance selon la revendication 9,
**caractérisé en ce que**
les fréquences de répétition d'impulsions sont choisies de manière que, dans le domaine d'ordre de grandeur de la distance de mesure externe maximale, il y ait au moins deux fréquences de répétition d'impulsions, dont les impulsions d'arrêt ne se touchent pas temporellement ni se chevauchent.

**11.** Dispositif de mesure de distance selon la revendication 10,
**caractérisé en ce que**
les fréquences de répétition d'impulsions sont choisies de manière que, pour un nombre maximal de combinaisons des intervalles d'espacement entre impulsions (22) $L_i$ et $L_j$ associés, la condition :

$$\left| N_i \bullet L_i - N_j \bullet L_j \right| \geq 2 \bullet \textit{largeur d'impulsion}$$

soit satisfaite, sachant que $L_i$ et $L_j$ sont des nombres positifs entiers, avec

$$\left| N_i \bullet L_i - N_j \bullet L_j \right| < 1/2 \bullet \min(L_i, L_j)$$

en particulier $N_i$, $N_j < 500$.

**12.** Dispositif de mesure de distance selon la revendication 9, 10 ou 11,
   **caractérisé par**
   au moins un mélangeur (9, 9a-d) pour soumettre le signal de réception (17) à un mélange abaisseur effectuant un signal de sortie (14) à basse fréquence.

**13.** Dispositif de mesure de distance selon la revendication 12,
   **caractérisé par**
   au moins un mélangeur analogique fonctionnant par impulsions, faisant office de sous-échantillonneur, pour la dilatation temporelle des signaux de réception (17).

**14.** Dispositif de mesure de distance selon l'une des revendications 9 à 13,
   **caractérisé en ce que**
   la source de rayonnement (5) est un laser à semi-conducteur en mode continu (cw).

**15.** Dispositif de mesure de distance selon l'une des revendications 9 à 14,
   **caractérisé par**
   au moins deux mélangeur de signaux électroniques, branchés en parallèle, fonctionnant avec une phase différente, en tant qu'agencement hétérodyne à plusieurs canaux.

Fig. 1

Fig. 2

Fig. 3

Fig. 4

**Fig. 5**

**Fig. 6**

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10006493 C2
- US 6369880 B
- WO 03069779 A
- DE 10112833 C1
- EP 1450123 A